# EUROPEAN PATENT SPECIFICATION

(11) **EP 4 052 580 B1**
(45) Date of publication and mention of the grant of the patent: **01.05.2024**
(21) Application number: 22160142.0
(22) Date of filing: 04.03.2022
(51) Int. Cl.: A21B 1/33, A21B 1/44, A21B 1/52, F24B 1/02, F24B 1/22

(54) **ROTARY COMBUSTION FURNACE**
DREHBARER VERBRENNUNGSOFEN
FOUR DE COMBUSTION ROTATIF

(30) Priority: 05.03.2021 CN 202120477259 U
(43) Date of publication of application: 07.09.2022
(73) Proprietor: Qingdao Genjoy Home Fashion Co., Ltd., 266002 Qingdao Shandong (CN); QStoves Inc, Sammamish, WA 98074 (US)
(72) Inventor: WU, Xiaohui, QINGDAO, SHANDONG (CN)
(74) Representative: Sun, Yiming

(56) References cited:
- EP-A1- 3 114 974
- WO-A1-2012/159131
- CN-U- 204 949 268
- DE-B4-102012 106 580
- DE-U1-202011 005 553
- GB-A- 2 528 854
- US-A- 1 638 745
- US-A- 3 657 996
- US-A- 5 144 939
- US-A1- 2014 326 232
- US-A1- 2017 354 155

## Description

### TECHNICAL FIELD

The present invention relates to the technical field of baking, for example, discloses a combustion furnace.

Specifically, the present invention relates to a combustion furnace of a generic type as defined in the generic part of claim 1 attached.

### BACKGROUND

Document GB 2528854 A discloses a combustion furnace of the generic type as defined above.

The baking chambers currently available in the domestic and overseas markets can be divided into electric, gas-fired, wood-burning chambers and the like according to energy/fuel. Electric baking chambers are limited by the power source, and cannot be carried easily and used at places without power supply. Gas-fired baking chambers use fossil fuels such as natural gas or liquefied petroleum gas, which are non-renewable and have rather high fuel costs. Wood-burning baking chambers have the disadvantages of being time-consuming and laborious to detach the firewood and difficult to get the firewood. The baking chamber that burns biomass pellets, with the advantages of environmental protection, cleanliness and low fuel cost, has gradually been accepted by consumers and gradually expanded in the market on account that the biomass pellets from biological straws, saw dust and wood dust that belongs to renewable resources (waste utilization) are used as the fuel.

Document GB 2528854 A discloses an oven assembly comprising a burner arranged exterior to a cooking chamber and supplying heat to the interior of the chamber. The burner comprises a cylindrical hollow body having a base and one or more walls defining a compartment defining a combustion zone. The one or more walls comprises one or more concentric skins and a hopper in communication with the compartment and through which fuel is delivered into the compartment.

Document EP 3 114 974 A1 discloses a cooking device with a heating chamber and a cooking chamber arranged above the heating chamber, the cooking chamber having a base plate through which the cooking chamber is separated from the heating chamber, wherein one or more passage openings are provided in the edge area of the base plate, through which smoke gas can be conducted from the heating chamber into the cooking chamber, and wherein in the upper area of the cooking chamber a smoke extraction opening is provided, through which the flue gas at least partially escapes from the cooking chamber. The cooking chamber has a thermal insulation layer in the upper area, an insertion opening on one side for inserting and removing food to be cooked, the smoke extraction opening is arranged close to the insertion opening, and a baffle plate with a storage edge is provided on the insertion opening in the upper area.

Document US 2014/0326232 A1 discloses a dual-fuel gas-pellet barbecue burner assembly including a combustion chamber, a pellet burner sub-assembly, and a gas burner sub-assembly. The pellet burner sub-assembly includes a motor-driven auger to deliver fuel pellets to the combustion chamber, and the gas burner sub-assembly includes a gas line that extends into the combustion chamber so that either pellets, gas, or both can be burned in the combustion chamber.

Document US 2017/0354155 A1 discloses an automated oven for producing and cooking bakery products, such as pizzas and the like.

Document DE 10 2012 106580 B4 discloses an oven device with an oven accommodated in an oven housing with a first opening for supplying a first gas mixture into the interior of the oven and a second opening for an exit of a second gas mixture formed by exhaust gases from the oven. The first gas mixture is at least partially formed by the flue gases produced during wood combustion with additional air and is provided for combustion within the oven, and the second gas mixture is formed by at least partial combustion of the combustible components of the first gas mixture.

Document WO 2012/159131 A1 discloses a pizza oven accessory for converting a kettle-type barbecue into a pizza oven. The pizza oven accessory includes a hollow body and a food receiving member. The hollow body is receivable between a fuel receiving base and a lid of a barbecue so as to define in use a cooking chamber within the hollow body and between the base and lid of the barbecue. The hollow body further defines an access opening through which food is introducible or removable from the cooking chamber. The food receiving member on which the food is receivable, is rotatably supported within or in proximity with the hollow body.

Document DE 20 2011 005553 U1 discloses a device for preparing food, with a fire chamber for accommodating combustible material, preferably wood, charcoal or charcoal briquettes, with a cooking chamber for accommodating food and with a chimney, these components being in gas connection with one another. The cooking chamber can be arranged both horizontally and vertically, preferably above the fire chamber by detachable connections. CN204949268U, US1638745A and

US3657996A disclose further relevant cooking devices of the prior art with rotating cooking plates.

Moreover, the current baking chamber is designed and manufactured to be large or heavy, is not portable, and cannot be detached and used in outdoor activities or camping.

### SUMMARY

With these problems in view, the present invention provides a combustion furnace as defined in claim 1 attached. Preferred embodiments of this combustion furnace are defined in dependent claims attached.

According to the present application, the combustion furnace may be separated from the baking chamber by virtue of providing the combustion section and the baking section which are removably connected, thus decreasing the floor area and making it easy to carry and use in outdoor activities or camping.

The heat supply port of the combustion section is in butt joint with the heat collection through hole such that the heat from the combustion chamber can be supplied to the baking chamber, so as to heat the food in the baking chamber.

The foregoing general description and the description in the following paragraphs are merely exemplary and explanatory, and are not intended to limit the present application.

### BRIEF DESCRIPTION OF THE DRAWINGS

One or more embodiments are illustrated exemplarily by the corresponding accompanying drawings, and the exemplary description and accompanying drawings do not constitute a limitation on the embodiments. Elements with the same reference numbers in the drawings are similar, and the accompanying drawings do not constitute a proportional limit, and wherein:
FIG. 1 is a structure diagram of a rotary combustion furnace provided by an embodiment of the present invention;
FIG. 2 is an internal structure diagram of a combustion section provided by an embodiment of the present invention;
FIG. 3 is a structure diagram of a combustion section provided by an embodiment of the present invention;
FIG. 4 is a schematic diagram of another rotary combustion furnace provided by an embodiment of the present invention;
FIG. 5 is a schematic diagram of another rotary combustion furnace provided by an embodiment of the present invention; and
FIG. 6 is a schematic diagram of a position of a heat collection through hole provided by an embodiment of the present invention.

### Reference numerals:

100. combustion section, 110. furnace body, 111. heat supply port, 112. vent, 120. combustion chamber, 130. heat collection cylinder, 131. first vent group, 132. second vent group, 140. oxygen supply tube, 150. storage hopper, 151. feeding pipe, 152. hopper cover, 160. grate, 170. ashtray, 180. lifting handle; 200. baking section, 210. baking chamber, 211. heat collection through hole, 212. heat spreading plate, 213. baffle, 214. rotating plate, 215. baking stone plate, 216. rotary handle, 217. baking door, 218. observation window, 219. door handle, 220. foldable support leg, 230. handle, 240. temperature detector, 250. chimney.

### DETAILED DESCRIPTION OF THE PREFERRED EMBODIMENTS

To have a more detailed understanding of the features and technical contents of the embodiments of the present invention, the following paragraphs will elaborate the implementation of the embodiments in conjunction with the accompanying drawings. The accompanying drawings are merely provided for reference and explanation purposes, but not intended to limit the embodiments. In the following technical description and facilitate the explanation, the disclosed embodiments are fully understood by a plurality of details. However, one or more embodiments can be still implemented without these details. Under other circumstances, the familiar structures and devices may be simply shown to simplify the accompanying drawings.

The terms. including "first", "second" and the like. in the description and claims of the present disclosure as well as the foregoing accompanying drawings herein are intended to distinguish the similar objects, instead of describing a specific sequence or a precedence order. It should be understood that the data used in such a way can be exchanged for the embodiments of the present disclosure described herein where appropriate. Further, the terms "comprise", "have" and any other variants thereof are intended to cover non-exclusive inclusion.

In the embodiments of the present disclosure, an orientation or position relation indicated by the terms "upper", "lower", "inner", "middle", "outer", "front", "rear", etc. is based upon the orientation or position relation shown in the accompanying drawings. These terms are mainly intended to describe the embodiments and implementations thereof of the present disclosure better, and are not intended to limit that the indicated devices, elements or components must have particular orientations, or be constructed and operated in a particular orientation. Moreover, some of the foregoing terms may serve to express other meanings besides the orientation or location relation, for example, the term "on" may also serve to express a certain dependency or connection relation in some cases. For those of ordinary skill in the art, the specific meanings of the above terms in the present invention may be understood depending on the specific conditions.

In addition, the terms "arrangement", "connection" and "fixation" should be understood broadly. For example, "connection" may be a fixed connection, a removable connection or an integral structure; may be a mechanical connection or an electrical connection; or may be a direct connection or an indirect connection through a medium, or communication between two devices, elements or components. To those of ordinary skill in the art, the specific meanings of the above terms in the embodiments of the present disclosure may be understood as the case may be.

Unless otherwise stated, the term "a plurality of" means two or more.

In the embodiments, the character "/" expresses an "or" relation between the front and rear objects. For example, A/B expresses A or B.

The term "and/or" is a correlation describing that the objects may have three relations. For example, "A and/or B" expresses three relations of A or B, or A and B.

It should be noted that the embodiments the features in the embodiments may be combined with each other without any conflict.

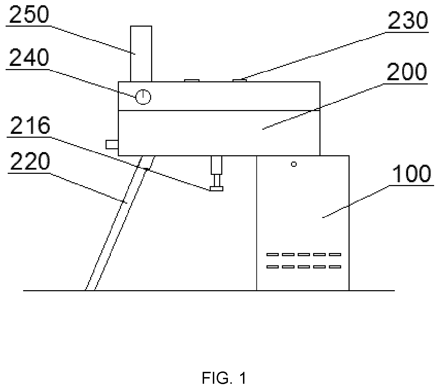

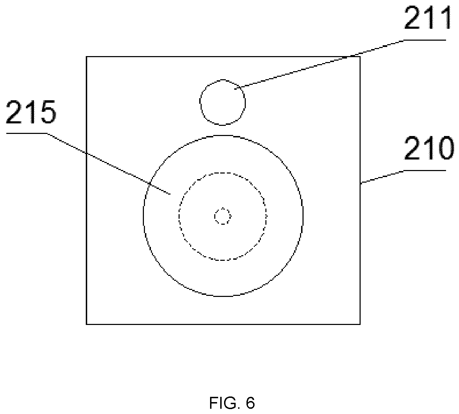

In connection with FIGs. 1-6, the embodiments provide a rotary combustion furnace, comprising a combustion section 100 and a baking section 200.

The combustion section 100 comprises a furnace body 110, and a heat supply port 111 is provided at the top of the furnace body 110.

The baking section 200 comprises a baking chamber 210, wherein a heat collection through hole 211 in butt joint with the heat supply port 111 is provided at the bottom of the baking chamber 210, and the heat collection through hole 211 and the heat supply port 111 are configured to heat food in the baking chamber 210,
wherein the combustion section 100 is removably connected to the baking section 200.

With the rotary combustion furnace provided by the embodiments, the combustion section 100 and the baking section 200, which are removably connected, are provided so that the combustion furnace can be separated from the baking chamber 210, thus decreasing the floor area, and making it easy to carry and use in outdoor activities or camping. The heat supply port 111 of the combustion section 100 is in butt joint with the heat collection through hole 211 such that the heat from the combustion chamber 120 can be supplied to the baking chamber 210, so as to heat the food in the baking chamber 210.

For the purpose of central heating and improving the heat supply efficiency, optionally, a combustion chamber 120 and a heat collection cylinder 130 are provided in the furnace body 110, the heat collection cylinder 130 is of a cylindrical structure with openings at both ends and located above the combustion chamber 120, one end of the heat collection cylinder 130 is in communication with the combustion chamber 120, and the other end thereof is in communication with the heat supply port 111.

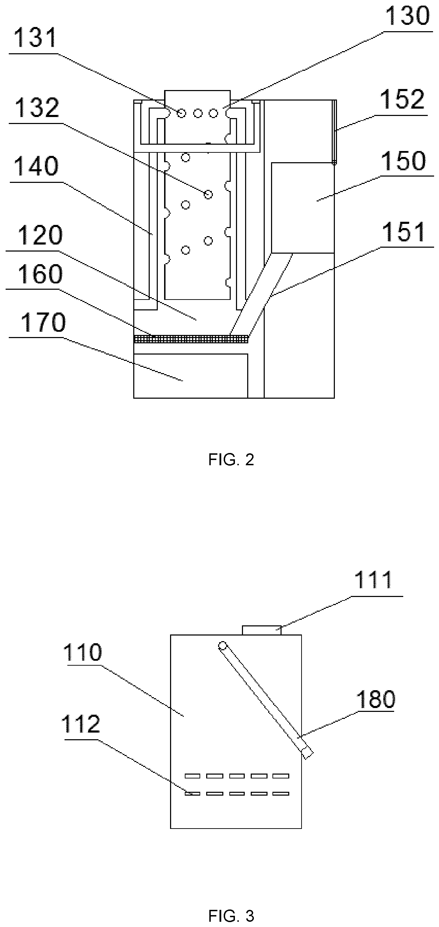

In combination with FIGs. 2 and 3, optionally, the furnace body 110 is provided with vents 112 to supply the oxygen required during the burning of the supplied fuel.

Optionally, the heat collection cylinder 130 is provided with first vent groups 131 to provide the heat collection cylinder 130 with the oxygen, making the unburned flue gas and fine particulates undergo the secondary combustion more fully, thus greatly reducing the flue gas emission.

Optionally, the heat collection cylinder 130 is spirally provided with second vent groups 132 from bottom to top along a cylinder wall, so as to provide the heat collection cylinder 130 with the oxygen constantly to help burn the unburned flue gas in the flame.

Optionally, the furnace body 110 further comprises an oxygen supply tube 140, one end thereof is in communication with the first vent groups 131, and the other end thereof is in communication with the vents 112, and the first vent groups 131 are located at an upper part of the heat collection cylinder 130 to supply the oxygen to the upper part of the heat collection cylinder 130.

To save the space and make it easy to carry, as shown in FIGs. 1, 4 and 5, optionally, the baking section 200 further comprises foldable support legs 220, arranged at the bottom of the baking chamber 210 away from one side of the heat collection through hole 211. The combustion section 100 and the foldable support legs 220 support the baking section 200 jointly when in use.

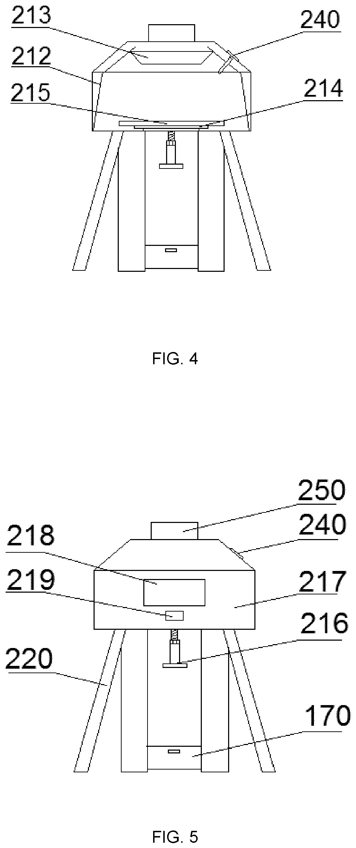

As shown in FIG. 4, optionally, a heat spreading plate 212 is provided in the baking chamber 210, and a side wall of the heat spreading plate 212 and the baking chamber 210 are angularly provided. When the flame enters the baking chamber 210 through the heat collection through hole 211, the flame heats the air in the baking chamber against the top of the baking chamber 210, so as to cook the food through thermal radiation; and the flame is not directly exposed to the baking stone plate 215. The heat spreading plate 212 can guide the flame to the front and top of the heat spreading plate 212, so as to make the temperature even in baking chamber 210.

Optionally, a baffle 213 is provided in the baking chamber 210 and located on an upper part of the baking chamber 210, so as to reduce heat loss.

In combination with FIGs. 1, 4 and 6, a rotating plate 214 and a baking stone plate 215 are provided in the baking chamber 210, and the baking stone plate 215 is arranged on the rotating plate 214.

The bottom of the baking chamber 210 is provided with a rotary handle 216 that is connected to the rotating plate 214 through a bottom housing of the baking chamber 210 to rotate the rotating plate 214.

As shown in FIG. 5, optionally, the baking chamber 210 is provided with a removable baking door 217 to pick and place the food.

Optionally, the baking door 217 is provided with an observation window 218 and a door handle 219, the observation window 218 can be provided to observe the food state conveniently, and the door handle 219 may be provided to pick and place the baking door 217, thus preventing a user from being burnt during operation.

Optionally, a chimney 250 is provided at the top of the baking chamber 210 and removably connected to the baking chamber 210.

Optionally, the baking section 200 further comprises a temperature detector 240 configured to detect the temperature in the baking chamber 210, so as to control the baking fire.

As shown in FIG. 3, optionally, a lifting handle 180 is provided at the top of the combustion section 100, so as to carry the combustion section 100 conveniently.

As shown in FIG. 1, optionally, a handle 230 is provided at the top of the baking section 200, so as to carry the baking section 200 conveniently.

When a biomass pellet fuel is fed into a storage hopper 150 if the rotary combustion furnace is in use, the biomass pellet fuel will slip to a grate 160 at the bottom of the combustion chamber 120 along an inclined feeding pipe 151 due to an action of gravity, and the aperture of holes/the size of gaps on the grate 160 is smaller than a diameter of the biomass pellet fuel, so that the unburned biomass pellet fuel will fall over the grate 160, but will not drop down. The grate 160 is enclosed by a side wall of the combustion chamber 120 to form an enclosed space, so that biomass pellets will intensively fall into the enclosed space of the combustion chamber 120, so as to form a small pile.

When the biomass pellet fuel on the grate 160 is ignited, the oxygen in the combustion chamber 120 is consumed so that the air pressure in the combustion chamber 120 decreases to form a pressure difference with the air in the outer space. The outside air flows to the combustion chamber 120 through the vents 112 on the housing, helping the fuel burn.

An upper part of the combustion chamber 120 is fixed with a cylindrical heat collection cylinder 130, a surface of the heat collection cylinder 130 is spirally distributed with the second vent groups 132 from bottom to top, and a top edge surface of the heat collection cylinder 130 is provided with a circle of first vent hole groups 131. The heat collection cylinder 130 is fixed with the combustion chamber 120 through a bracket. Four corners of the bracket are distributed with four oxygen supply tubes 140, an upper end of each oxygen supply tube 140 is fixed on the bracket to be in communication with the first vent groups 131, and a lower end thereof is connected to a lower part of the combustion chamber 120 and is in communication with the outside through the vents 112.

A housing is provided outside the combustion chamber 120 to cover the combustion chamber 120, the storage hopper 150 and the feeding pipe 151 integrally therein. The bottom of the housing is provided with a plurality of vents 112, through which the combustion chamber 120 is in communication with the outside to provide the combustion with the oxygen. An ashtray 170 is provided at the bottom of the combustion chamber 120 and below the grate 160. After the biomass pellet fuel on the grate 160 is burned, the volume thereof decreases to become ashes, and these ashes fall into the ashtray 170 through the holes on the grate 160, making it easy to collect the ashes; and moreover, the ash from the burned biomass pellet fuel is a good fertilizer. An inlet of the storage hopper 150 is provided with a hopper cover 152 which is fixed on a hopper inlet through a revolving shaft to open/close around the revolving shaft.

A round hole is defined in the housing of the combustion furnace to make the heat collection cylinder 130 protrude for a small section of length from the round hole; and the bottom of the combustion furnace is closed.

When the biomass pellet fuel is burned in the combustion chamber 120, the oxygen in the combustion chamber 120 is consumed, and then the outside air flows into the combustion chamber 120 through the vents to help burn. The flame and partially unburned flue gas rise from the combustion chamber 120 along the heat collection cylinder 130, and the surface of the heat collection cylinder 130 provides the oxygen constantly along the second vent groups 131 which are spirally distributed during the rise, so as to help the unburned flue gas in the flame burn. The oxygen supply tube 140 also transports more oxygen to the upper part of the heat collection cylinder 130 from the outside via the vents 112, so as to form the secondary oxygen supply; and when the unburned flue gas and fine particulates reach the top of the heat collection cylinder 130, the first vent groups 131 provided at the top supply the oxygen, making the unburned flue gas and fine pellets undergo the secondary combustion more fully, thus maximally reducing the flue gas emission.

According to the present invention, the heat collection cylinder 130 may be provided to conduct the heat or flame to the heat supply port 111 from the combustion chamber 120, so that a user may cook food or boil water with a kettle via the heat or flame from the heat supply port 111. In addition, the user may directly place an ignition material from the height of the combustion furnace through the heat supply port 111 for operation.

A back end of a bottom plate of the baking chamber 210 is provided with the heat collection through hole 211 which has the same diameter as the heat supply port 111 (heat collection pipe) of the combustion section 100, and the top of the heat collection pipe of the combustion section 100 may be inserted into the baking chamber 210 through the heat collection through hole 211 to provide the baking chamber 210 with a heat source. The whole baking section 200 is communicated by virtue of the heat collection through hole 211 and the heat collection pipe of the combustion section 100, and the bottom plate of the baking chamber 210 is just located on the top of the combustion section 100.

A heat spreading plate 212 is provided in the baking chamber 210, and a double-layer housing is designed to be conducive to keeping the baking chamber 210 warm. The heat spreading plate 212 is a slope near a back side wall of the baking chamber 210, so that the flame from the heat collection pipe is guided to the front and top of the heat spreading plate 212 along the slope after reaching the slope of the heat spreading plate 212. Such design may distribute the flame to the top of the baking chamber 210 more evenly, which is conducive to uniformly heating the interior of the baking chamber 210.

A front opening of the baking chamber 210 is provided with a baking door 217 which can be removed separately, the baking door 217 is opened/closed to place and pick the food conveniently, and the baking door 217 is embedded with an observation window 218 made from the transparent high temperature glass, through which the baking of food and the flame in the baking chamber 210 are observed. The baking door 217 is provided with a door handle 219 for grasping to open/close the baking door 217.

An opening is formed in the center of the bottom plate of the baking chamber 210, a central shaft of the rotating plate 214 penetrates out of the interior of the baking chamber 210 through the opening, and one end of the central shaft is connected with a rotary handle 216. A circular baking stone plate 215 is arranged on the rotating plate 214. When the rotating plate 214 rotates, the baking stone plate 215 on the rotating plate 214 also rotates. Thus, when the food is baked, the food is placed on the baking stone plate 215, and then people may rotate the rotary handle 216 to rotate the baking stone plate 215, so as to rotate the food placed thereon. Hence, different parts of the food rotate to approach the fire, making the food baked more evenly.

Two foldable support legs 220 are provided in front of the bottom surface of the bottom plate of the baking chamber 210, so that the baking chamber 210 may stably stand on the plane surface when the foldable support legs 220 are propped apart. When the foldable support legs 220 are retracted to cling to the bottom surface of the baking chamber 210, thus saving space and making it easy to store.

One side of the baking chamber 210 is provided with a temperature detector 240 to make the people read the temperature in the baking chamber 210; and a handle 230 is provided in the top center of the housing of the baking chamber 210, so as to lift the whole baking chamber 210 easily, making it easy to carry and move. A round opening or chimney connector is provided in front of the housing of the baking chamber 210, and the chimney connector is removably connected to a section of chimney 250. The chimney 250 may increase the pressure difference between the interior of the baking chamber 210 and the outside, so as to pull out the air outwards to generate the air flow; and the burned flue gas is also discharged to the exterior space through the chimney 250.

According to the detachable design, the present invention is divided into the combustion section 100 and the baking section 200, both of which may be detached and combined. The combustion section 100 takes the biomass pellets as the fuel to provide the baking chamber 210 with the heat source; by virtue of natural ventilation and gravity feeding methods, the biomass pellets may be also used in a power failure circumstance or a circumstance without power supply even if no external power source is required; the biomass pellets are taken as the fuel, and a ventilation system for primary combustion and secondary combustion is designed to make emissions less and realize environmental protection; and
the combustion section 100 may be combined with or separated from the baking section 200 conveniently to realize small volume, light weight and convenience to carry and move, thus being applicable to outdoor and camping occasions. The baking stone plate 215 that may rotate is designed in the baking chamber 210, and may keep the temperature better when the food is baked, so as to bake the food quickly; and the baking stone plate 215 may rotate to heat the food thereon more evenly, so as to bake the more delicious food.

The above description and figures fully show the embodiments, so as to make those skilled in the art practice them. Other embodiments may include changes to structure and other changes. The embodiments only represent possible changes. Unless explicitly requested, separate component and function are optional, and the operation sequence thereof can vary. Parts and features of certain embodiments may be included or may replace the parts and features of other embodiments. The scope of the present invention is defined by the attached claims.

## Claims

1. A combustion furnace, comprising:
a combustion section (100), comprising a furnace body (110), wherein a heat supply port (111) is provided at the top of the furnace body (110); and
a baking section (200), comprising a baking chamber (210) having a bottom plate,
wherein a heat collection through hole (211) in butt joint with the heat supply port (111) is provided at a back end of the bottom plate of the baking chamber (210), and the heat collection through hole (211) and the heat supply port (111) are configured to heat food in the baking chamber (210),
wherein the combustion section (100) is removably connected to the baking section (200), **characterized in that**
a rotating plate (214) rotatable around a central shaft of the rotating plate and a baking stone plate (215)
are provided in the baking chamber (210), and the baking stone plate (215) is arranged on the rotating plate (214); and
the bottom of the baking chamber (210) is provided with a rotary handle (216) connected to the rotating plate (214) via the central shaft penetrating through an opening in a center of the bottom plate of the baking chamber (210).

2. The combustion furnace according to claim 1, wherein
a combustion chamber (120) and a heat collection cylinder (130) are provided in the furnace body (110), the heat collection cylinder (130) is of a cylindrical structure with openings at both ends and located above the combustion chamber (120), one end of the heat collection cylinder (130) is in communication with the combustion chamber (120), and the other end thereof is in communication with the heat supply port (111).

3. The combustion furnace according to claim 2, wherein
vents (112) are defined in the furnace body (110).

4. The combustion furnace according to claim 3, wherein
the heat collection cylinder (130) is provided with first vent groups (131).

5. The combustion furnace according to claim 4, wherein
the heat collection cylinder (130) is spirally provided with second vent groups (132) from top to bottom along a cylinder wall.

6. The combustion furnace according to claim 4, wherein the furnace body (110) further comprises:
an oxygen supply tube (140), wherein one end thereof is in communication with the first vent groups (131), and the other end thereof is in communication with the vents (112), and the first vent groups (131) are located at an upper part of the heat collection cylinder (130).

7. The combustion furnace according to any one of claims 1 to 6, wherein the baking section (200) comprises:
foldable support legs (220), arranged at the bottom of the baking chamber (210) away from one side of the heat collection through hole (211).

8. The combustion furnace according to any one of claims 1 to 6, wherein
a heat spreading plate (212) is provided in the baking chamber (210), and a side wall of the heat spreading plate (212) and the baking chamber (210) are angularly provided.

9. The combustion furnace according to any one of claims 1 to 6, wherein
the baking chamber (210) is provided with a removable baking door (217).

10. The combustion furnace according to claim 9, wherein
the baking door (217) is provided with an observation window (218) and a door handle.

11. The combustion furnace according to any one of claims 1 to 6, wherein
a chimney (250) is provided at the top of the baking chamber (210).

12. The combustion furnace according to claim 11, wherein
the chimney (250) is removably connected to the baking chamber (210).

13. The combustion furnace according to any one of claims 1 to 6, wherein the baking section (200) further comprises:
a temperature detector (240) configured to detect the temperature in the baking chamber (210).

14. The combustion furnace according to any one of claims 1 to 6, wherein
a lifting handle (180) is provided at the top of the combustion section (100).

15. The combustion furnace according to any one of claims 1 to 6, wherein
a handle (230) is provided at the top of the baking section (200).

## Patentansprüche

1. Verbrennungsofen, umfassend:
einen Verbrennungsabschnitt (100), der einen Ofenkörper (110) umfasst, wobei eine Wärmezufuhröffnung (111) an dem Oberteil des Ofenkörpers (110) vorgesehen ist; und
einen Backabschnitt (200), der eine Backkammer (210) mit einer Bodenplatte umfasst, wobei ein Wärmesammeldurchgangsloch (211) in Stoßverbindung mit der Wärmezufuhröffnung (111) an einem hinteren Ende der Bodenplatte der Backkammer (210) vorgesehen ist und das Wärmesammeldurchgangsloch (211) und die Wärmezufuhröffnung (111) eingerichtet sind, um Lebensmittel in der Backkammer (210) zu erhitzen,
wobei der Verbrennungsabschnitt (100) lösbar mit dem Backabschnitt (200) verbunden ist, **dadurch gekennzeichnet, dass**
ein Drehteller (214), der um eine Mittelwelle des Drehtellers drehbar ist, und eine Backsteinplatte (215) in der Backkammer (210) vorgesehen sind und die Backsteinplatte (215) auf dem Drehteller (214) angeordnet ist; und
der Boden der Backkammer (210) mit einem Drehgriff (216) versehen ist, der mit dem Drehteller (214) über die Mittelwelle verbunden ist, die durch eine Öffnung in einer Mitte der Bodenplatte der Backkammer (210) dringt.

2. Verbrennungsofen nach Anspruch 1, wobei
eine Brennkammer (120) und ein Wärmesammelzylinder (130) in dem Ofenkörper (110) vorgesehen sind, der Wärmesammelzylinder (130) eine zylindrische Struktur mit Öffnungen an beiden Enden aufweist und sich oberhalb der Brennkammer (120) befindet, ein Ende des Wärmesammelzylinders (130) in Verbindung mit der Brennkammer (120) steht und sein anderes Ende in Verbindung mit der Wärmezufuhröffnung (111) steht.

3. Verbrennungsofen nach Anspruch 2, wobei
Entlüftungen (112) in dem Ofenkörper (110) definiert sind.

4. Verbrennungsofen nach Anspruch 3, wobei
der Wärmesammelzylinder (130) mit ersten Entlüftungsgruppen (131) versehen ist.

5. Verbrennungsofen nach Anspruch 4, wobei
der Wärmesammelzylinder (130) spiralförmig von oben nach unten entlang einer Zylinderwand mit zweiten Entlüftungsgruppen (132) versehen ist.

6. Verbrennungsofen nach Anspruch 4, wobei der Ofenkörper (110) ferner umfasst:
ein Sauerstoffzufuhrrohr (140), wobei ein Ende davon mit den ersten Entlüftungsgruppen (131) in Verbindung steht und das andere Ende davon mit den Entlüftungen (112) in Verbindung steht, und die ersten Entlüftungsgruppen (131) sich an einem oberen Teil des Wärmesammelzylinders (130) befinden.

7. Verbrennungsofen nach einem der Ansprüche 1 bis 6, wobei der Backabschnitt (200) umfasst:
klappbare Stützfüße (220), die an dem Boden der Backkammer (210) entfernt von einer Seite des Wärmesammeldurchgangslochs (211) angeordnet sind.

8. Verbrennungsofen nach einem der Ansprüche 1 bis 6, wobei
eine Wärmeausbreitungsplatte (212) in der Backkammer (210) vorgesehen ist und eine Seitenwand der Wärmeausbreitungsplatte (212) und der Backkammer (210) in einem Winkel angeordnet sind.

9. Verbrennungsofen nach einem der Ansprüche 1 bis 6, wobei die Backkammer (210) mit einer abnehmbaren Backtür (217) versehen ist.

10. Verbrennungsofen nach Anspruch 9, wobei
die Backtür (217) mit einem Sichtfenster (218) und einem Türgriff versehen ist.

11. Verbrennungsofen nach einem der Ansprüche 1 bis 6, wobei ein Abzug (250) an dem Oberteil der Backkammer (210) vorgesehen ist.

12. Verbrennungsofen nach Anspruch 11, wobei
der Abzug (250) lösbar mit der Backkammer (210) verbunden ist.

13. Verbrennungsofen nach einem der Ansprüche 1 bis 6, wobei der Backabschnitt (200) ferner umfasst:
einen Temperaturfühler (240), der eingerichtet ist, um die Temperatur in der Backkammer (210) zu erfassen.

14. Verbrennungsofen nach einem der Ansprüche 1 bis 6, wobei ein Hebegriff (180) an dem Oberteil des Verbrennungsabschnitts (100) vorgesehen ist.

15. Verbrennungsofen nach einem der Ansprüche 1 bis 6, wobei ein Griff (230) an dem Oberteil des Backteils (200) vorgesehen ist.

## Revendications

1. Four à combustion, comprenant :
une section de combustion (100), comprenant un corps de four (110), un corps d'alimentation en chaleur (111) étant prévu au sommet du corps de four (110) ; et
une section de cuisson (200), comprenant une chambre de cuisson (210) dotée d'une plaque inférieure, une un trou traversant de collecte de chaleur (211) en aboutement avec le port d'alimentation en chaleur (111) étant prévu à une extrémité arrière de la plaque inférieure de la chambre de cuisson (210), et le trou traversant de collecte de chaleur (211) et le port d'alimentation en chaleur (111) étant configurés pour chauffer des aliments dans la chambre de cuisson (210),
la section de combustion (100) étant connectée de manière amovible à la section de cuisson (200), **caractérisé en ce**
**qu'**une plaque tournante (214) pouvant tourner autour d'un arbre central de la plaque tournante et qu'une plaque de pierre de cuisson (215) sont prévues dans la chambre de cuisson (210), et que la plaque de pierre de cuisson (215) est disposée sur la plaque tournante (214) ; et
le fond de la chambre de cuisson (210) est pourvu d'une poignée rotative (216) connectée à la plaque tournante (214) via l'arbre central pénétrant à travers une ouverture dans un centre de la plaque inférieure de la chambre de cuisson (210).

2. Four de combustion selon la revendication 1, dans lequel
une chambre de combustion (120) et un cylindre de collecte de chaleur (130) sont prévus dans le corps de four (110), le cylindre de collecte de chaleur (130) est une structure cylindrique dotée d'ouvertures aux deux extrémités et située au-dessus de la chambre de combustion (120), une extrémité du cylindre de collecte de chaleur (130) est en communication avec la chambre de combustion (120), et son autre extrémité est en communication avec le port d'alimentation en chaleur (111).

3. Four de combustion selon la revendication 2, dans lequel des bouches d'aération (112) sont définies dans le corps de four (110).

4. Four de combustion selon la revendication 3, dans lequel
le cylindre de collecte de chaleur (130) est pourvu de premiers groupes de bouches d'aération (131).

5. Four de combustion selon la revendication 4, dans lequel
le cylindre de collecte de chaleur (130) est pourvu en spirale de seconds groupes d'aérations (132) du haut en bas le long d'une paroi cylindrique.

6. Four de combustion selon la revendication 4, dans lequel le corps de four (110) comprend en outre :
un tube d'alimentation en oxygène (140), une de ses extrémités étant en communication avec les premiers groupes de bouches d'aération (131), et son autre extrémité étant en communication avec les bouches d'aération (112), et les premiers groupes de bouches d'aération (131) étant situés dans une partie supérieure du cylindre de collecte de chaleur (130).

7. Four de combustion selon l'une quelconque des revendications 1 à 6, dans lequel la section de cuisson (200) comprend :
des pieds supports pliables (220) disposés au fond de la chambre de cuisson (210) à distance d'un côté du trou traversant de collecte de chaleur (211).

8. Four de combustion selon l'une quelconque des revendications 1 à 6, dans lequel
une plaque d'étalement de chaleur (212) est prévue dans la chambre de cuisson (210), et une paroi latérale de la plaque d'étalement de chaleur (212) et la chambre de cuisson (210) sont prévues angulairement.

9. Four de combustion selon l'une quelconque des revendications 1 à 6, dans lequel
la chambre de cuisson (210) est pourvue d'une porte de cuisson amovible (217).

10. Four de combustion selon la revendication 9, dans lequel
la porte de cuisson (217) est pourvue d'une fenêtre d'observation (218) et d'une poignée de porte.

11. Four de combustion selon l'une quelconque des revendications 1 à 6, dans lequel
une cheminée (250) est prévue au sommet de la chambre de cuisson (210).

12. Four de combustion selon la revendication 11, dans lequel
la cheminée (250) est connectée de manière amovible à la chambre de cuisson (210).

13. Four de combustion selon l'une quelconque des revendications 1 à 6, dans lequel la section de cuisson (200) comprend en outre :
un détecteur de température (240) configuré pour détecter la température dans la chambre de cuisson (210).

14. Four de combustion selon l'une quelconque des revendications 1 à 6, dans lequel
une poignée de levage (180) est prévue au sommet de la section de combustion (100).

15. Four de combustion selon l'une quelconque des revendications 1 à 6, dans une poignée (230) est prévue au sommet de la section de cuisson (200).
